# EUROPÄISCHE PATENTSCHRIFT

(11) **EP 0 651 371 B1**
(45) Veröffentlichungstag und Bekanntmachung des Hinweises auf die Patenterteilung: **08.12.1999**
(21) Anmeldenummer: 94114004.8
(22) Anmeldetag: 07.09.1994
(51) Int. Cl.: G10K 11/172, G10K 11/16, F16F 15/02

(54) **Schwingungsabsorber zur Körperschalldämpfung**
Vibration absorber for damping of structural sound
Amortisseur de vibration pour atténuer le son structurel

(30) Priorität: 30.10.1993 DE 4337162
(43) Veröffentlichungstag der Anmeldung: 03.05.1995
(73) Patentinhaber: LFK Lenkflugkörpersysteme GmbH, 81663 München (DE)
(72) Erfinder: Bschorr, Oskar, Dr., D-81679 München (DE); Zimmermann, Klaus, D-81245 München (DE)
(74) Vertreter: Hummel, Adam

(56) Entgegenhaltungen:
- EP-A- 0 044 956
- EP-A- 0 521 740
- DE-A- 3 113 268
- DE-U- 8 809 318
- US-A- 3 672 658
- US-A- 4 373 608

## Beschreibung

Die Erfindung betrifft einen Schwingungsabsorber zur Körperschalldämpfung mit einem Wellenleiter, welcher in Wellenlaufrichtung eine Schichtfolge aus Masse-Feder-Elementen aufweist.

Ein derartiger Schwingungsabsorber ist in der DE 31 13 268 C2 beschrieben. Die einzelnen Masse-Elemente verjüngen sich bei diesem Absorber in Laufrichtung der zu absorbierenden Körperschallwellen, so daß der gesamte Absorber die Form eines Hornteiles aufweist. Die Federelemente können entweder durch elastische Kunststoffe oder, nach einem besonderen Ausführungsbeispiel der DE 31 13 268 C2, durch Kugeln, welche in pfannenförmige Vertiefungen der Massenelemente eingelassen sind, realisiert werden. Die Masse-Elemente sind in jedem Fall jedoch starr. Während die Verwendung von Kunststoffen durch den relativ schmalen nutzbaren Temperaturbereich begrenzt ist, fordert die Verwendung von Kugeln und entsprechenden pfannenförmigen Vertiefungen einen relativ hohen Fertigungsaufwand.

Aus der DE-U-88 09 318 ist ein Schichtsystem zur Reduktion der Reflexion einfallenden Schallwellen bekannt. Auf einem Reflektor sind abwechselnd Absorptionsschichten und Zwischenschichten aufgebracht. Die Zwischenschichten weisen Abstützungen in Stempelform auf. Auf das Schichtsystem fällt Wasserschall ein, biegt sich die Absorptionsschicht im Bereich zwischen den Abstützungen durch Verbleibende Druckkräfte werden über die Abstützungen auf die nächste Absorptionsschicht übertragen.

Es ist daher Aufgabe der vorliegenden Erfindung, einen breitbandigen Schwingungsabsorber nach dem Wellenleiterprinzip zu schaffen, der mit geringem Fertigungsaufwand herstellbar ist und möglichst keinen oder nur einen geringfügigen und leicht abtrennbaren Kunststoffanteil besitzt.

Die Lösung dieser Aufgabe gelingt durch einen nach den Merkmalen des Patenanspruchs 1 ausgebildeten Schwingungsabsorber.

Bei dem erfindungsgemäßen Schwingungsabsorber wird im Gegensatz zum Stand der Technik auf ein separates Federelement in dem segmenierten Wellenleiter verzichtet. Die notwendige Federung wird vielmehr durch die natürlichen elastischen Eigenschaften des Masse-Elementes ersetzt. Dies gelingt dadurch, daß die Masse-Elemente als Biegebalken oder -platten eingesetzt werden, die bei schwingungsbedingtem Druck oder Zug eine Durchbiegung erfahren;dadurch entstehen kombinierte Masse-Feder-Elemente.

Besonders einfach läßt sich die Funktion als Biegebalken oder -platte dadurch erzielen, daß die einzelnen Masse-Feder-Elemente mit Distanzhaltern versehen sind, wobei mindestens je ein Distanzhalter eines Masse-Feder-Elementes zwischen zwei Distanzhaltern des benachbarten Masse-Feder-Elementes angeordnet ist. Da die Kraftübertragung über die Distanzhalter erfolgt, drückt also jeder Distanzhalter etwa in die Mitte des Bereiches eines Masse-Feder-Elementes, welches sich auf zwei Distanzhalter zum benachbarten Masse-Feder-Element abstützt. Dadurch wird auch erreicht, daß ein Masse-Feder-Element quer zur Wellenlaufrichtung mehrfach durchgebogen wird.

Die Federelemente können aus einen Masse-Element auch dadurch gebildet werden, daß innerhalb eines Masse-Feder-Elementes durch Einschnitte oder Materialverjüngung flexible Bereiche gebildet werden, auf welchen je ein Distanzhalter angeordnet ist.

Eine besonders einfache Art einen Distanzhalter zwischen zwei Masse-Feder-Elementen zu erzeugen besteht darin, daß dieser als punktförmige Schweißverbindung ausgebildet ist. Damit genügend Abstand zwischen den Masse-Feder-Elementen besteht, sollte der Schweißpunkt zweckmäßigerweise auf einer leichten Erhebung, die beispielsweise durch Prägung erzeugt wurde, angesetzt sein.

Falls die innere Reibung bei der Durchbiegung der Masse-Feder-Elemente nicht ausreichen sollte, empfiehlt es sich, daß der Wellenleiter einen reflexionsfreien Abschluß aufweist, wie er beispielsweise ebenfalls aus der DE 31 13 268 C2 bekannt ist.

Zur Erhöhung der Dämpfung kann auch der Wellenleiter, d.h. also der Stapel aus schichtweise aufeinander gesetzten und durch Distanzhalter verbundenen Masse-Feder-Elemente, an seinen äußeren Wandbereichen mit einer Dämpfungsmasse umgeben sein. Diese läßt sich ggf. leicht wieder entfernen bzw. erneuern.

Wenn der Schwingungsabsorber in allen drei translatorischen und drei rotatorischen Freiheitsgraden wirksam sein soll, ist es von Vorteil, wenn zwischen den Masse-Feder-Elementen eine zusätzliche Feder und/oder eine Dämpfungsmasse angeordnet ist.

Die Erfindung wird im folgenden anhand der in den Figuren teilweise schematisch dargestellten Ausführungsbeispielen näher beschrieben. Es zeigen:
- Fig.1: einen Querschnitt durch einen Schwingungsabsorber mit schichtweise aufgebautem Wellenleiter,
- Fig. 2: einen Absorber analog zu demjenigen aus Fig. 1 mit zusätzlicher Dämpfung,
- Fig. 3: eine Aufsicht auf ein Masse-Feder-Element mit ausgeschnittener Feder,
- Fig. 4: eine Alternative zur Ausführung gemäß Fig. 3,
- Fig. 5: einen Ausschnitt aus einem schichtweise aufgebauten Schwingungsabsorber mit zusätzlicher Luftfeder,
- Fig. 6: einen Schwingungsabsorber zur Anbringung an rotierenden Bauteilen,
- Fig. 7: einen Querschnitt durch einen stangenförmigen Schwingungsabsorber,
- Fig. 8a, b, c: einen aus einem Monoblock hergestellten Schwingungsabsorber,
- Fig. 9: einen ebenfalls aus einem Monoblock hergestellten Schwingungsabsorber,
- Fig. 10: einen plattenförmigen Schwingungsabsorber.

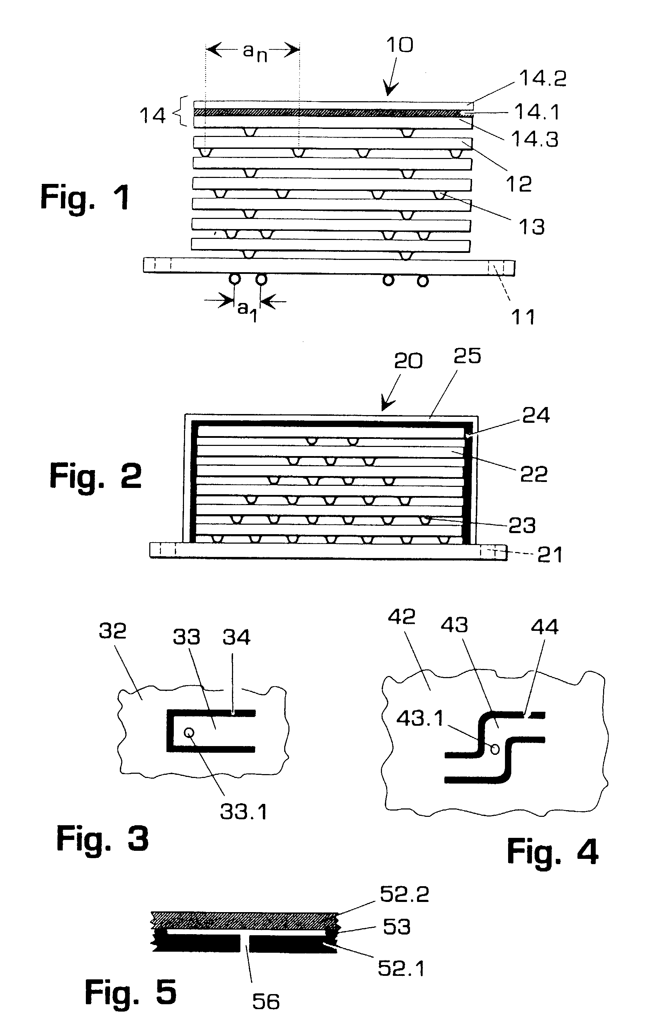

In Fig. 1 ist eine Grundausbildung eines Schwingungsabsorbers 10 dargestellt. Dieser besteht aus einer Lage von mehreren identischen Metallplatten 12, wobei die einzelnen Metallplatten schichtweise übereinander gestapelt und über Distanzhalter 13 kraftschlüssig bzw. momentschlüssig miteinander verbunden sind. Die Distanzhalter können z.B. durch Ausbuchtungen in den Metallplatten erzeugt werden, an denen dann je zwei benachbarte Metallplatten miteinander punktförmig verschweißt werden. Die Distanzhalter 13 zweier aufeinander folgender Metallplatten 12 werden so angebracht, daß der zwischen zwei Distanzhaltern 13 liegende Teil einer Metallplatte 12 bei senkrecht zu den Metallplatten verlaufenden Druck- oder Zugkräften durchgebogen wird und somit als Federung wirkt. Durch Vergrößerung des Abstandes a₁, ...aₙ zweier Distanzhalter 13 innerhalb einer Metallplatte 12 von der als Befestigung dienenden Platte 11 bis zur Endplatte 14 erreicht man eine in Wellenlaufrichtung abnehmende Federung. Die Endplatte 14 ist als Sandwichplatte bestehend aus zwei Metallplatten 14.2 und 14.3 mit dazwischen liegender Dämpfungsschicht 14.1 ausgebildet und wirkt als reflexionsfreier Abschluß. Zur Dämpfung von Strukturschwingungen wird der gesamte Schwingungsabsorber 10 über die Befestigungsplatte 11 an dem zu dämpfenden Bauteil kraft- und/oder momentschlüssig befestigt.

In ähnlicher Weise wirkt der in Figur 2 dargestellte Schwingungsabsorber 20, wobei auch hier an einer Befestigungsplatte 21 ein Stapel von Metallplatten 22, die über Distenzhalter 23 miteinander verbunden sind, angeordnet ist. Die abnehmende Federung und damit eine abnehmende Wellengeschwindigkeit, wird hier durch Verringerung der Anzahl der Distanzhalter 23 zwischen je zwei benachbarten Metallplatten von Schicht zu Schicht erreicht. Der gesamte Stapel von Metallplatten ist hier von einem Gehäuse 25 umgeben, an dessen Innenseite ein Dämpfungsbelag 24 so aufgebracht ist, daß er mit den äußeren Rändern der Metallplatten 22 in Verbindung steht und diese dämpft.

Um eine schwingungsdynamische Entartung mit zusammenfallenden Eigenresonanzen auszuschließen kann es vorteilhaft sein, die Distanzhalter asymmetrisch anzubringen. Bei dem Ausführungsbeispiel gemäß Fig. 1 kann z.B. die Symmetrie dadurch aufgehoben werden, daß die Folge von Distanzhaltern 13 der rechten und linken Seite unterschiedlich sind; ebenso die Folge in der Bildtiefe. Bei dem Ausführungsbeispiel gemäß Fig. 2 kann die Aufhebung der Symmetrie dadurch erreicht werden, daß die Distanzhalter 23 außermittig in Bezug auf den Metallplattenstapel angebracht sind.

Bei den Ausführungsbeispielen gemäß Figuren 3 und 4, die jeweils einen Ausschnitt aus einer Metallplatte eines Plattenstapels darstellen, sind die Federelemente 33 bzw. 43 in die Metallplatte 32 bzw. 42 integriert. In Fig. 3 ist das Federelement 33 eine eingeschnittene Balkenfeder, die aufgrund ihrer Form nur senkrecht zur Ebene einer Metallplatte 32 wirkt. Demgegenüber ist das Federelement 43 gemäß Fig. 4 in drei translatorischen und drei rotatorischen Freiheitsgraden wirksam. Durch entsprechend andere Formgebung der Einschnitte zur Bildung derartiger Federelemente läßt sich die Zahl der Schwingungsfreiheitsgrade variieren. Die einzelnen Platten 32 bzw. 42 sind wie bei den Ausführungsbeispielen gemäß Fig. 1 bzw. 2 übereinandergestapelt und an den Punkten 33.1 bzw. 34.1 mit der jeweils benachbarten Metallplatte verbunden. Die Balkenfedern 33 bzw. 43 können zusätzlich dadurch mit einer Dämpfung versehen werden, daß ein Dämpfungsstoff 33, 44 in die die Balkenfedern bildenden Einschnitte gefüllt wird.

Bei dem in Fig. 5 dargestellten Querschnitt durch zwei benachbarte Metallplatten 52.1 und 52.2 schließen die Distanzstücke 53 ein Luftvolumen zwischen den Metallplatten 52.1 und 52.2 ab. Diese eingeschlossene Luft wirkt als zusätzliche Feder, wobei die Steifigkeit und die Dämpfung durch einen Kanal 56 in einer Metallplatte 52.1 beeinflußbar ist.

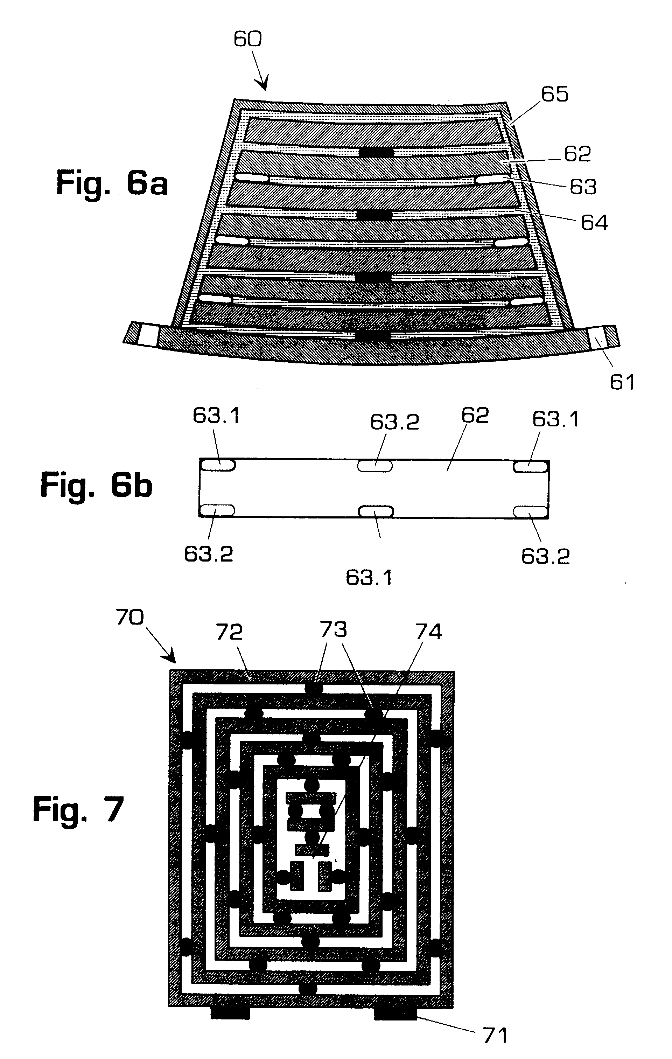

Die Fig. 6a zeigt einen Schnitt in Seitenansicht und Fig. 6b einen Schnitt in Draufsicht durch einen Schwingungsabsorber 60, der vorzugsweise zur Dämpfung rotierender Bauteile, wie z.B. Schienenräder, geeignet ist. Hier sind Metallstreifen 62 durch eine abwechselnde Folge von Distanzhalter 63 miteinander verbunden derart, daß ein Distanzhalter 63 einer Metallplatte 62 auf ein freistehendes Flächenteil der benachbarten Metallplatte trifft. Dies ist in Fig. 6b durch die gestrichelt dargestellten Distanzhalter 63.2 dargestellt, welche im Gegensatz zu den Distanzhaltern 63.1 zu einer über- bzw. unter der Metallplatte 62 liegenden benachbarten Metallplatte gehören. Der gesamte Stapel von Metallplatten ist wiederum in einem mit der Befestigungsplatte 61 dicht verbundenen Gehäuse 65 untergebracht, um auch eine Stabilität gegenüber Fliehkraftbelastung zu gewährleisten. Zur zusätzlichen Dämpfung kann das Gehäuse 65 mit Öl 64 gefüllt sein.

Der Schwingungsabsorber 70 gemäß Fig. 7 ist als Halbzeug bzw. als Meterware gedacht. Die Massenelemente 72 bilden hier konzentrische Kastenprofile, die durch Distanzhalter 73, z.B. ensprechend den Ausführungen der Fig. 3 und 4 gehalten werden. Ein nach Bedarf abgelenktes Stück eines derartigen Schwingungsabsorbers wird am äußeren Kastenprofil über Befestigungen 71 mit dem zu bedämpfenden Bauteil verbunden, so daß die Wellenlaufrichtung vom äußeren Kastenprofil in das Zentrum hin verläuft. Das Innenteil entspricht daher dem Ende des Wellenleiters, in dem sich Dämpfungselemente 74 als reflexionsfreier Abschluß befinden. Anstelle des rechteckigen Kastenprofils sind selbstverständlich auch beliebige andere Querschnittsformen verwendbar, insbesondere auch offene Profile wie z.B. U- oder Winkelprofile.

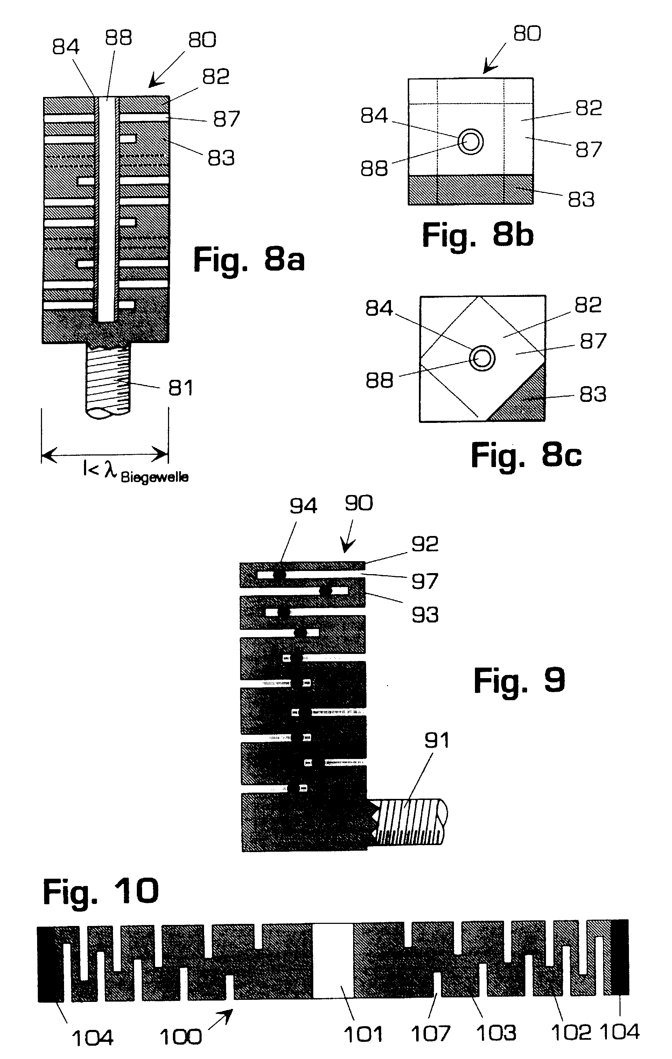

Die Schwingungsabsorber gemäß Fig. 8a und 9 sind jeweils aus einem Monoblock hergestellt. Diese Art eignet sich insbesondere für stabförmige Ausbildungen. Der Blockquerschnitt ist beliebig wählbar, z.B. kann er rund, quadratisch oder rechteckig sein. Fig. 8a stellt einen Längsschnitt und die Fig. 8b und c jeweils alternative Querschnitte durch einen Schwingungsabsorber 80 dar. Durch Einschnitte 87 werden Massenelemente 82 gebildet, die über verbleibende Stege 83 kraft- und momentschlüssig miteinander verbunden sind. In Fig. 8b sind die Einschnitte parallel zu den Seiten und in Fig. 8c diagonal dazu angebracht. Die in Wellenlaufrichtung von der Befestigung 81 ausgehende Abnahme der Federsteifigkeit wird durch zunehmende Einschnittstiefe und/oder abnehmende Dicke der durch die Einschnitte segmentierten Massenelemente 82 erreicht. Zur Beseitigung von Schwingungsentartung durch Formsymmetrie und zur Anregung möglichst vieler Schwingungsrichtungen sind die Einschnitte umlaufend von allen Seiten sowie zusätzlich asymmetrisch angebracht. In der Mitte des Schwingungsabsorbers 80 befindet sich ein durchgehender Reibstab 88, dessen Oberfläche mit einer Dämpfungsschicht 84 z.B. einem Metalldrahtgewirke belegt ist.

Der Schwingungsabsorber 90 gemäß Fig. 9 ist analog zu demjenigen nach Fig. 8 ausgebildet. Einschnitte 97 in einen Monoblock bilden wiederum Massenelemente 92 mit verbleibenden Stegen 93. Die Dämpfung wird durch Dämpfungseinlagen 94 in den Einschnitten 97 bewerkstelligt. Über die Befestigung 91 wird der Schwingungsabsorber 90 an dem zu dämpfenden Bauteil befestigt.

Der Schwingungsabsorber 100 nach Fig. 10 ist in Plattenform hier als Ronde ausgeführt. Von einer zentralen Befestigung 101 ausgehend sind hier Einschnitt 107 mit zunehmender Einschnittiefe vorgesehen. In der hier gezeigten Querschnittsdarstellung schaffen die Einschnitte 107 wiederum Massenelemente 102, die durch Stege 103 kraft- und momentschlüssig verbunden sind. Am äußeren Rand der Scheibe befindet sich dann ein reflexionsfreier Abschluß in Form einer Dämpfungsschicht 104, analog zu den vorhergehenden Ausführungsbeispielen.

Bei der Dämpfung von stabförmigen Strukturen oder von Rohren sind aus Platzgründen Schwingungsabsorber vorteilhaft, die diese mantelförmig umschließen. Dazu ist es möglich, die oben beschriebenen Ausführungsbeispiele mit rechteckigem und rundem Querschnitt auch ringförmig zu gestalten.

## Patentansprüche

1. Schwingungsabsorber zur Körperschalldämpfung mit einem Wellenleiter, welcher in Wellenlaufrichtung eine Schichtfolge aus Masse-Feder-Elementen aufweist **dadurch gekennzeichnet**, daß die Masse-Feder-Elemente als Biegebalken oder -platten (..2) mit in Wellenlaufrichtung abnehmender Federsteifigkeit ausgebildet sind, welche über versetzt zueinander angeodnete Distanzhalter (..3) kraft- und/oder momentschlüssig miteinander verbunden sind derart, daß bei Druck oder Zug auf diese eine Durchbiegung innerhalb mindestens eines Masse-Feder-Elementes erfolgt.

2. Schwingungsabsorber nach Anspruch 1 **dadurch gekennzeichnet**, daß mindestens je ein Distanzhalter eines Masse-Feder-Elementes zwischen zwei Distanzhaltern des benachbarten Masse-Feder-Elementes angeordnet ist.

3. Schwingungsabsorber nach Anspruch 1 oder 2 **dadurch gekennzeichnet**, daß innerhalb eines Masse-Feder-Elementes (32, 42) durch Einschnitte oder Materialverjüngung flexible Bereiche (33, 43) gebildet werden, auf welchen Je ein Distanzhalter (33.1, 43.1) angeordnet ist.

4. Schwingungsabsorber nach einem der Ansprüche 1 bis 3, **dadurch gekennzeichnet**, daß ein Distanzhalter (13, 23) als punktförmige Schweißverbindung ausgebildet ist.

5. Schwingungsabsorber nach einem der Ansprüche 1 bis 4 **dadurch gekennzeichnet**, daß der Wellenleiter einen reflexionsfreien Abschluß (14, 74, 104) aufweist.

6. Schwingungsabsorber nach einem der Ansprüche 1 bis 5 **dadurch gekennzeichnet,** daß der Wellenleiter an seinem äußeren Wandbereich mit einer Dämpfungsmasse (24) umgeben ist.

7. Schwingungsabsorber nach einem der Ansprüche 1 bis 6 **dadurch gekennzeichnet**, daß zwischen den Masse-Feder-Elementen eine zusätzliche Feder (56) und/oder eine Dämpfungsmasse (64, 94) angeordnet ist.

## Claims

1. Vibration absorber for the damping of structure-borne sound, having a waveguide which has, in the direction of wave travel, a layer sequence of mass-spring elements, characterised in that the mass-spring elements are in the form of bending bars or bending plates (...2) which have spring rigidity decreasing in the direction of wave travel and which are so connected to one another in a force-locking and/or moment-locking manner by means of spacers (..3) arranged in an offset manner relative to one another, that, if pressure or tension is applied to them, deformation occurs inside at least one mass-spring element.

2. Vibration absorber according to claim 1, characterised in that at least one spacer of each mass-spring element is arranged between two spacers of the adjacent mass-spring element.

3. Vibration absorber according to claim 1 or 2, characterised in that flexible regions (33, 43), on each of which a respective spacer (33.1, 43.1) is arranged, are formed inside a mass-spring element (32, 42) by indentations or the tapering of material.

4. Vibration absorber according to any one of claims 1 to 3, characterised in that a spacer (13, 23) is in the form of a spot weld connection.

5. Vibration absorber according to any one of claims 1 to 4, characterised in that the waveguide has a non-reflecting termination (14, 74, 104).

6. Vibration absorber according to any one of claims 1 to 5, characterised in that the outer wall region of the waveguide is surrounded by a damping mass (24).

7. Vibration absorber according to any one of claims 1 to 6, characterised in that additional springing (56) and/or a damping mass (64, 94) is arranged between the mass-spring elements.

## Revendications

1. Amortisseur de vibration pour atténuer le son structurel, équipé d'un guide d'ondes, présentant dans la direction de déplacement des ondes une succession de couches constituées d'éléments masse-ressort,
caractérisé en ce que
les éléments masse-ressort sont réalisés sous la forme de poutres ou de plaques de flexion (..2) ayant une rigidité élastique décroissante dans la direction de déplacement des ondes, et reliées ensemble, par l'intermédiaire d'organes d'espacement (..3) décalés les uns par rapport aux autres et transmettant les interactions de forces et/ou de couples, de manière que, en cas de pression ou de traction exercée sur ceux-ci, un fléchissement se produise à l'intérieur d'au moins un élément masse-ressort.

2. Amortisseur de vibration selon la revendication 1,
caractérisé en ce qu'
au moins un organe d'espacement d'un élément masse-ressort est disposé entre deux organes d'espacement de l'élément masse-ressort voisin.

3. Amortisseur de vibration selon la revendication 1 ou 2,
caractérisé en ce qu'
à l'intérieur d'un élément masse-ressort (32, 42) sont constituées, par formation d'entailles ou d'effilement de matériau, des zones flexibles (33, 43) sur chacune desquelles est disposé un organe d'espacement (33.1, 43.1).

4. Amortisseur de vibration selon l'une des revendications 1 à 3,
caractérisé en ce qu'
un organe d'espacement (13, 23) est réalisé sous la forme de liaison soudée, à soudage par points.

5. Amortisseur de vibration selon l'une des revendications 1 à 4,
caractérisé en ce que
le guide d'ondes présente une délimitation (14, 74, 104) exempte de réflexion.

6. Amortisseur de vibration selon l'une des revendications 1 à 5,
caractérisé en ce que
le guide d'ondes est entouré sur sa zone de paroi extérieure par une masse d'amortissement(24).

7. Amortisseur de vibration selon l'une des revendications 1 à 6,
caractérisé en ce qu'
un ressort supplémentaire (56) et/ou une masse d'amortissement supplémentaire (64, 94) est disposé entre les éléments masse-ressort.
